# EUROPEAN PATENT APPLICATION

(11) **EP 4 549 036 A1**
(43) Date of publication of application: **07.05.2025**
(21) Application number: 23937078.6
(22) Date of filing: 23.05.2023
(51) Int. Cl.: B07C 3/08

(54) **MULTI-CHANNEL SORTING MACHINE FOR PARCEL SINGULATION**

(30) Priority: 18.05.2023 CN 202310563084
(71) Applicant: Wayzim Technology Co., Ltd., Wuxi, Jiangsu 214000 (CN)
(72) Inventor: OUYANG, Qingsheng, Wuxi, Jiangsu 214000 (CN); CAI, Ye, Wuxi, Jiangsu 214000 (CN); RUI, Hao, Wuxi, Jiangsu 214000 (CN)
(74) Representative: von Tietzen und Hennig, Nikolaus
(86) International application number: PCT/CN2023/095805
(87) International publication number: WO 2024/234399

(57) **Abstract**

A multi-channel sorting machine for parcel singulation, comprising a feeding mechanism, parcel separation channels, a roller centering machine, and a dragsaw belt conveyor. Each parcel separation channel comprises a multi-channel stacked parcel separation mechanism (1) and a multi-channel parcel singulation mechanism (2). In the process of conveying parcels by an inclined conveyor belt (111), the inclined conveyor belt (111) suddenly accelerates and then suddenly decelerates, so that misalignment is caused between two stacked parcels by means of acceleration on the basis of the inertia; then a visual identification system (113) of a previous stacked parcel separation unit (11) identifies the misalignment of the parcels according to the overlapping of the parcels conveyed by the current stacked parcel separation unit (11), the maximum speed of the inclined conveyor belt (111) of a next stacked parcel separation unit (11) is controlled to further separate vertically stacked parcels, and when the vertically stacked parcels are separated, no change in the speed of the inclined conveyor belt (111) is made, thereby reducing the damage to the conveyor belt from sudden acceleration.

## Description

### TEAHNICAL FIELD

The present invention relates to the technical field of the logistics sorting equipment, and specifically to a multi-channel sorting machine for parcel singulation.

### BACKGROUND

With the development of the transportation and the industrial decentralization, it is inevitable that the industrial and civilian goods are circulated between different places. As a result, the logistics industry has developed vigorously, for example, the industries such as the logistics distribution center of the civil aviation company, the postal services, the express delivery, the tobacco industry and the beer industry that are mainly based on the logistics. In the logistics industry, due to the flow directions of the multiple batches and various products are different in the logistics, the product sorting is involved in the final logistics distribution process, so that the sorting of the goods is particularly important in the logistics industry.

As the automation of the logistics sorting becomes higher and higher, the various corresponding equipments are developed to implement the unmanned sorting. In the process of the logistics sorting, a plurality of parcels are in a stacked state, which is not conducive to sorting.

### SUMMARY

In the prior art, the standard sorting machines are commonly composed of an feeding belt conveyor, a stacked-parcels separating area, a single-parcel separating area, a centering machine, and a dragsaw belt conveyor. Each of the machines can be served as a separate module device to implement a specified function. The separating methods utilized by the common stacked-parcels separation are mostly separated by utilizing the deflector rod or the gravity of the inclined conveyor belt. However, the utilization environment of both of the above methods is limited, which is not conducive to the separation of the parcels of various sizes and the parcels with high friction. In addition, most current sorting machines are operated in a single channel, which has a lower separation efficiency, and a wide vacant region and a low channel utilization. In view of the problems in the relevant technology, no effective solution has been provided currently.

Provided is a multi-channel sorting machine for parcel singulation, and the multi-channel sorting machine comprises a feeding mechanism, parcel separation channels, a roller centering machine and a dragsaw belt conveyor. The parcels are fed into the parcel separation channels by the feeding mechanism for separating, then the parcels are centered, rectified a misalignment, and aligned by the roller centering machine, and subsequently fed into the dragsaw belt conveyor to pull each parcels apart by one certain distance then output. At least two parcel separation channels are provided, each of the parcel separation channels is arranged side by side, and a partition is arranged between two adjacent parcel separation channels. Widths of the feeding mechanism, the roller centering machine and the dragsaw belt conveyor are all adapted to a total width of all of the parcel separation channels arranged side by side. Each of the parcel separation channels includes a multi-channel stacked-parcels separation mechanism and a multi-channel parcel singulation mechanism, each of the multi-channel stacked-parcels separation mechanism includes a plurality of stacked-parcel separation channels, each of the multi-channel parcel singulation mechanisms includes a plurality of parcel singulation channels, and in each of the parcel separation channels, the number of the stacked-parcels separation channels is equal to the number of the parcel singulation channels. Each of the stacked-parcels separation channels includes a plurality of stacked-parcels separation units and a transferring unit, the plurality of stacked-parcels separation units are connected end to end in sequence, and the transferring unit is configured to transfer the parcels conveyed by a last stacked-parcels separation unit to the parcel singulation channel corresponding to the stacked-parcel separation channel. Each of the stacked-parcels separation units includes an inclined conveyor belt, a horizontal conveyor belt and a visual identification system. The visual identification system is capable of identifying whether the parcels are overlapped, and the visual identification system of a previous stacked-parcels separation unit is capable of controlling a maximum velocity of the inclined conveyor belt of a subsequent stacked-parcels separation unit according to an overlapping condition of the parcels conveyed by the current stacked-parcels separation unit.

Preferably, in an i-th stacked-parcels separation unit, an initial velocity of each of the inclined conveyor belts is V0, and a maximum velocity of the inclined conveyor belt is Vi. The velocity of the inclined conveyor belt suddenly accelerates from V0 to Vi, and then suddenly decelerates from Vi to V0, to separate the stacked parcels conveyed in the i-th stacked-parcels separation unit.

Preferably, in the i-th stacked-parcels separation unit, when the velocity of the inclined conveyor belt is at V0, the visual identification system is configured to identify parcel area data of a conveying surface of the current inclined conveyor belt and calculate a percentage Wi% of a parcel area to a conveying surface area of the inclined conveyor belt. A stacking condition of the parcels conveyed by an (i+1)-th stacked-parcels separation unit at this time instant is determined through comparing the Wi of the parcels conveyed by the i-th stacked-parcels separation unit with a Wi+1 of the parcels conveyed by the (i+1)-th stacked-parcels separation unit.

Preferably, when Wi+1=2Wi, it is determined that the parcels are stacked in the i-th stacked-parcels separation unit, whereas the stacked parcels are completely separated in the (i+1)-th stacked-parcels separation unit. When Wi+1=Wi, it is determined that the parcels are not stacked in the i-th stacked-parcels separation unit, and when Wi<Wi+1<2Wi, it is determined that the parcels are stacked in the i-th stacked-parcels separation unit, and the parcels stacked in the (i+1)-th stacked-parcels separation unit are still in a stacked state.

Preferably, in a case of Wi+1=2Wi and Wi+1=Wi, when the parcels are not stacked in the (i+1)-th stacked-parcels separation unit, the maximum velocity Vi+1 of the inclined conveyor belt is equal to Vi in the (i+1)-th stacked-parcels separation unit.

Preferably, in a case of Wi<Wi+1<2Wi, when the parcels are stacked in the i-th stacked-parcels separation unit, and the parcels stacked in the (i+1)-th stacked-parcels separation unit are still in the stacked state, the maximum velocity Vi+1 of the inclined conveyor belt is greater than or equal to Vi in the (i+1)-th stacked-parcels separation unit.

Preferably, in the case of Wi< Wi+1 <2Wi, when the parcels are stacked in the i-th stacked-parcels separation unit, and the parcels stacked in the (i+1)-th stacked-parcels separation unit are still in the stacked state, a ratio Xi+1 of a stacking difference between the parcels stacked in the (i+1)-th stacked-parcels separation unit and the parcels stacked in the i-th stacked-parcels separation unit is calculated, where Xi+1=(Wi+1-Wi)/W1. When Xi+1≥0.5, the maximum velocity Vi+1 of the inclined conveyor belt is equal to Vi in the (i+1)-th stacked-parcels separation unit, and when Xi+1<0.5, the maximum velocity Vi+1 of the inclined conveyor belt is equal to 1.2Vi in the (i+1)-th stacked-parcels separation unit.

Preferably, each of the parcel singulation channels includes a plurality of parcel singulation units and a single-parcel visual system, a conveying velocity of each of the parcel singulation units is capable of being set individually, and the single-parcel visual system is configured to identify parcel classification information, control the conveying velocity of each of the parcel singulation unit individually, and arrange the parcels in order.

Preferably, each of the parcel singulation units includes a transmission belt, side guard plates, a driving roller, a synchronous pulley and a synchronous belt. The side guard plates are arranged on both sides of the transmission belt, and servo motors are arranged inside the two side guard plates, an output shaft of the servo motor is capable of outputting a power to the synchronous pulley through the synchronous belt, and a rotation of the synchronous pulley is capable of being transmitted to the driving roller coaxial with the synchronous pulley, and the driving roller is capable of driving the transmission belt to rotate.

### Benefit effects

Compared with the prior art, a multi-channel sorting machine for parcel singulation is provided in the present invention, which has the following beneficial effects:
1. The multi-channel sorting machine for the parcel singulation can satisfy the multi-purpose requirements through combing the different numbers of the feeding mechanisms, the parcel separation channels, the roller centering machines and the dragsaw belt conveyors, and arranging a plurality of channels inside the parcel separation channel, while can effectively improve the parcel processing efficiency of the entire multi-channel sorting machine for parcel singulation through arranging a plurality of channels, reducing the vacant regions on both sides of each of the channels and increasing the utilization efficiency of the same area.
2. In the multi-channel sorting machine for parcel singulation, in each of the stacked-parcels separation unit, the parcels are firstly entered the inclined conveyor belt, during the conveying process of the inclined conveyor belt, the visual identification system can identify whether the parcels are overlapped, the visual identification system of the previous stacked-parcels separation unit can control the maximum velocity of the inclined conveyor belt of the subsequent stacked-parcels separation unit according to the overlapping condition of the parcels conveyed by the current stacked-parcels separation unit; during the process of conveying the parcels by the inclined conveyor belt, the velocity of the inclined conveyor belt suddenly accelerates and then suddenly decelerates, so that a misalignment is generated between the two parcels stacked up and down through an acceleration caused by a sudden variation in velocity on basis of an inertia generated between the two parcels stacked up and down (parcels in stacked state), then the visual identification system of the previous stacked-parcels separation unit can identify the misalignment of the parcels according to the overlapping condition of the parcels conveyed by the current stacked-parcels separation unit, and control the maximum velocity of the inclined conveyor belt of the subsequent stacked-parcels separation unit, so as to further separate the stacked parcels when a larger acceleration is required, which ensures the effectiveness of the separation of the parcels stacked up and down, and terminates the variation of the velocity of the inclined conveyor belt after the parcels stacked up and down are separated, thereby reducing the damage to the conveyor belt caused by the sudden acceleration, while saving one certain amount of the energy.
3. In the multi-channel sorting machine for parcel singulation, when the parcels are still in the stacked state, the maximum velocity Vi+1 of the inclined conveyor belt is controlled to be varied, and the misalignment degree between the two parcels stacked up and down in the previous (i-th) stacked-parceld separation unit can be obtained through calculating the ratio Xi+1 of the stacking difference of parcels in the current ((i+1)-th) stacked-parcels separation unit. When the misalignment degree is greater than 0.5, the maximum velocity Vi+1 of the current inclined conveyor belt is equal to Vi, and the maximum velocity is not varied. When the misalignment degree is consistent with the preset value in the previous stacked-parcels separation unit, and the misalignment degree of the current stacked-parcels separation unit is also greater than 0.5, so that the two parcels stacked up and down can be completely separated in the current stacked-parcels separation unit. When the misalignment degree is less than 0.5, a force applied to the two parcels stacked up and down is relatively increased through letting the maximum velocity Vi+1 of the inclined conveyor belt be equal to 1.2Vi, that is, increasing the acceleration of the inclined conveyor belt in the (i+1)-th stacked-parcels separation unit, so that the two parcels stacked up and down can be separated more effectively, and the separation degree of the parcels stacked in the stacked-parcels separation unit is effectively ensured.

### BRIEF DESCRIPTION OF THE DRAWINGS

FIG. 1 illustrates a first schematic diagram of a three-dimensional structure of a multi-channel sorting machine for parcel singulation according to the present invention.
FIG. 2 illustrates an enlarged view of part A of FIG. 1 in the present invention.
FIG. 3 illustrates a second schematic diagram of the three-dimensional structure of a multi-channel sorting machine for parcel singulation according to the present invention.
FIG. 4 illustrates a first schematic diagram of a three-dimensional structure of a multi-channel stacked-parcels separation mechanism according to the present invention.
FIG. 5 illustrates a second schematic diagram of the three-dimensional structure of the multi-channel stacked-parcel separation mechanism in the present invention.
FIG. 6 illustrates a schematic diagram of the three-dimensional structure of a stacked-parcels separation unit in the present invention.
FIG. 7 illustrates a schematic diagram of the three-dimensional structure of an inclined conveyor belt in the present invention.
FIG. 8 illustrates a first schematic diagram of a three-dimensional structure of a multi-channel parcel singulation mechanism in the present invention.
FIG. 9 illustrates a second schematic diagram of the three-dimensional structure of the multi-channel parcel singulation mechanism in the present invention.
FIG. 10 illustrates a schematic diagram of the three-dimensional structure of a parcel singulation unit in the present invention.

Reference numerals of the drawings: 1. Multi-channel stacked-parcels separation mechanism; 11. Stacked-parcels separation unit; 111. Inclined conveyor belt; 112. Horizontal conveyor belt; 113. Visual identification system; 12. Transferring unit; 2. Multi-channel parcel singulation mechanism; 21. Parcel singulation unit; 211. Transmission belt; 212. Side guard plate; 213. Driving roller; 214. Synchronous pulley; 215. Synchronous belt; 22. Single-parcel visual system.

### DETAILED DESCRIPTION OF THE EMBODIMEN

The technical solutions in the embodiments of the present invention will be clearly and completely described with reference to the drawings in the embodiments of the present invention. Obviously, the described embodiments are merely one part of the embodiments of the present invention, not all of the embodiments. Based on the embodiments of the present invention, all other embodiments obtained by those of ordinary skilled in that art without creative efforts are within the protection scope of the present invention.

As introduced in the background technology, there are deficiencies in the prior art. In order to solve the above technical problems, a multi-channel sorting machine for parcel singulation is provided in the present application.

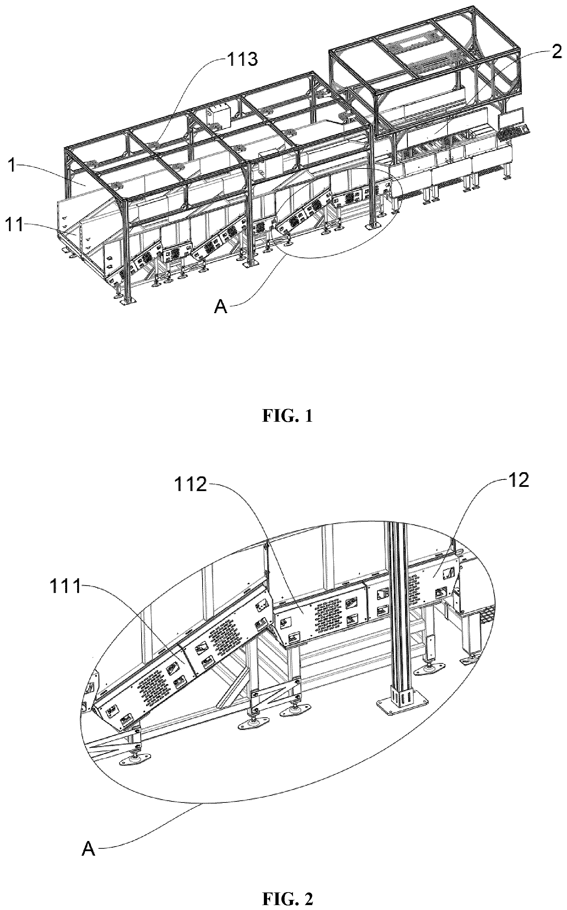

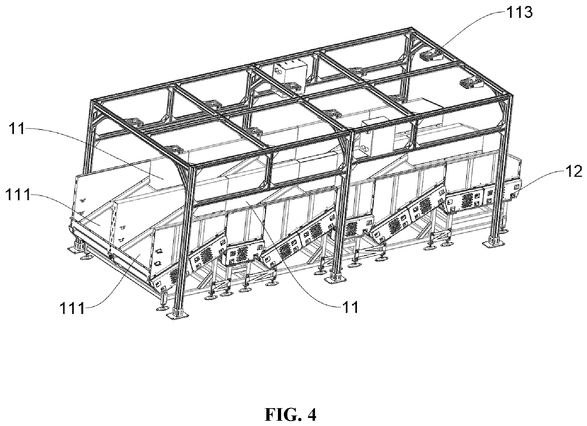

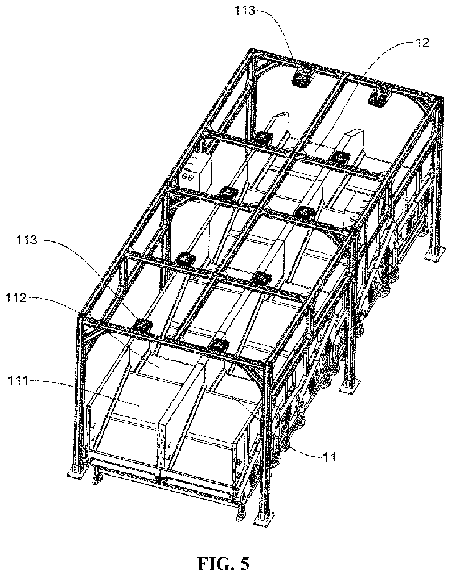

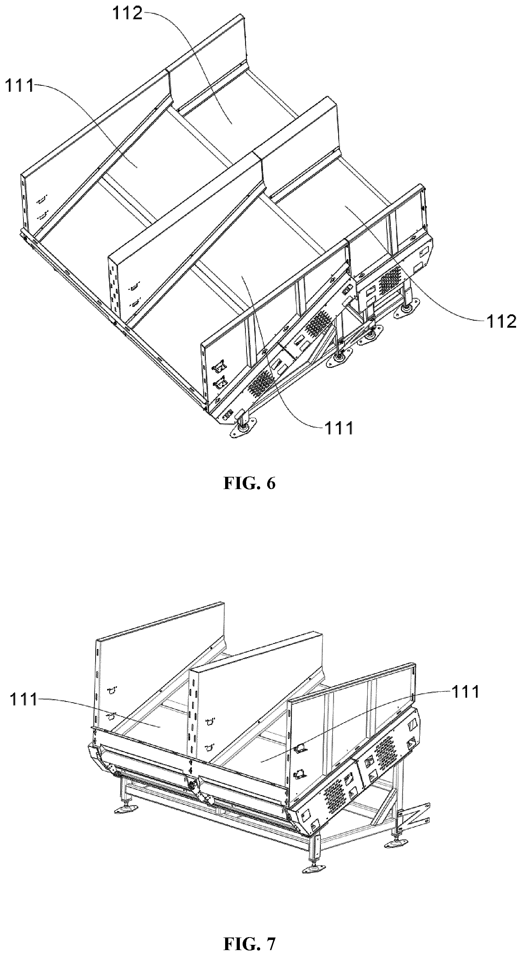

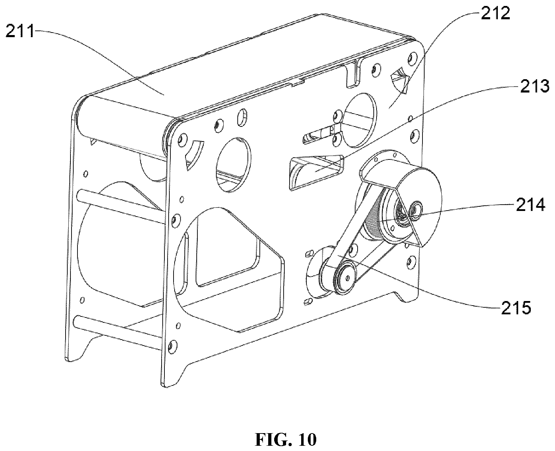

With reference to FIGS. 1 to 10, provided is a multi-channel sorting machine for the parcel singulation. The multi-channel sorting machine includes a feeding mechanism, parcel separation channels, a roller centering machine and a dragsaw belt conveyor. The parcels are fed into the parcel separation channels by the feeding mechanism for separating, then the parcels are centered, rectified a misalignment, and aligned by the roller centering machine, and subsequently fed into the dragsaw belt conveyor to pull each parcels apart by one certain distance then output. At least two parcel separation channels are provided, each of the parcel separation channels is arranged side by side, and a partition is arranged between two adjacent parcel separation channels. Widths of the feeding mechanism, the roller centering machine and the dragsaw belt conveyor are all adapted to a total width of all of the parcel separation channels arranged side by side. Each of the parcel separation channels includes a multi-channel stacked-parcels separation mechanism 1 and a multi-channel parcel singulation mechanism 2, each of the multi-channel stacked-parcels separation mechanism 1 includes a plurality of stacked-parcel separation channels, each of the multi-channel parcel singulation mechanisms 2 includes a plurality of parcel singulation channels, and in each of the parcel separation channels, the number of the stacked-parcels separation channels is equal to the number of the parcel singulation channels. Each of the stacked-parcels separation channels includes a plurality of stacked-parcels separation units 11 and a transferring unit 12, the plurality of stacked-parcels separation units 11 are connected end to end in sequence, and the transferring unit 12 is configured to transfer the parcels conveyed by the last stacked-parcels separation unit 11 to the parcel singulation channel corresponding to the stacked-parcel separation channel. Each of the stacked-parcels separation units 11 includes an inclined conveyor belt 111, a horizontal conveyor belt 112 and a visual identification system 113. The visual identification system 113 is capable of identifying whether the parcels are overlapped, and the visual identification system 113 of the previous stacked-parcels separation unit 11 is capable of controlling a maximum velocity of the inclined conveyor belt 111 of the subsequent stacked-parcels separation unit 11 according to an overlapping condition of the parcels conveyed by the current stacked-parcels separation unit 11.

When in use, the feeding mechanism, the parcel separation channels, the roller centering machine and the dragsaw belt conveyor are all modularly designed. The roller centering machine and the dragsaw belt conveyor utilize the same-named roller centering machine and the dragsaw belt conveyor in a fully automatic feeding system for a cross-belt sorting system in the prior patent application CN202111663821.X. The specific structures and the specific use principles of the roller centering machine and the dragsaw belt conveyor are not be described in detail herein. When in specific use, the different numbers of the feeding mechanisms, the parcel separation channels, the roller centering machines and the dragsaw belt conveyors can be combined according to the actual requirements of the parcel sorting and the classification to complete the conveying, classification and separation of the parcels. In one embodiment, the feeding mechanism, the parcel separation channel, the roller centering machine and the dragsaw belt conveyor are preferably one and are combined in sequence. The parcels are respectively conveyed into the two parcel separation channels arranged side by side and separated by a partition through the feeding mechanism according to the conveying positions of the parcels. In each of the parcel separation channels, the parcels are firstly passed through the multi-channel stacked-parcels separation mechanism 1, and since the multi-channel stacked-parcel separation mechanism includes a plurality of stacked-parcel separation channels, each of the parcels can be conveyed into a corresponding one of the stacked-parcel separation channels, respectively, according to the conveying directions of the conveyor belts. In each of the stacked-parcels separation channels, the parcels are passed through a plurality of the stacked-parcels separation units 11 connected end to end in sequence, after the overlapped parcels are separated, the parcels are conveyed into the transferring unit 12 for transferring, subsequently conveyed to the corresponding parcel singulation channel in the multi-channel parcel singulation mechanism 2 corresponding to the stacked-parcels separation channel, and then screened and separated by the parcel singulation channel, and after the parcels are centered, rectified a misalignment and aligned by the roller centering machine, eventually conveyed into the dragsaw belt conveyor to pull each parcels apart by one certain distance, then output, so that the parcel sorting operation is completed. The multipurpose requirements can be satisfied through combining different numbers of the feeding mechanisms, the parcel separation channels, the roller centering machines and the dragsaw belt conveyors, and arranging a plurality of channels inside the parcel separation channel, and the parcel processing efficiency of the entire multi-channel sorting machine for the parcel singulation can be effectively improved through arranging a plurality of channels, reducing the vacant regions on both sides of each of the channels, and increasing the utilization efficiency of the same areas.

In each of the stacked-parcels separation unit 11, the parcels are firstly entered the inclined conveyor belt 111. During the conveying process of the inclined conveyor belt 111, the visual identification system 113 can identify whether the parcels are overlapped, and the visual identification system 113 of the previous stacked-parcels separation unit 11 can control the maximum velocity of the inclined conveyor belt 111 of the subsequent stacked-parcels separation unit 11 according to the overlapping condition of the parcels conveyed by the current stacked-parcels separation unit 11. During the process of conveying the parcels by the inclined conveyor belt 111, the velocity of the inclined conveyor belt 111 suddenly accelerates and then suddenly decelerates, so that a misalignment is generated between the two parcels stacked up and down through an acceleration caused by a sudden variation in velocity on the basis of an inertia generated between the two parcels stacked up and down (parcels in stacked state), then the visual identification system 113 of the previous stacked-parcels separation unit 11 can identify the misalignment of the parcels according to the overlapping condition of the parcels conveyed by the current stacked-parcels separation unit 11, and control the maximum velocity of the inclined conveyor belt 111 of the subsequent stacked-parcels separation unit 11, so as to further separate the stacked parcels when a greater acceleration is required, which ensures the effectiveness of the separation of the parcels stacked up and down, terminates the variation of the velocity of the inclined conveyor belt after the parcels stacked up and down are separated, thereby reducing the damage to the conveyor belt caused by the sudden acceleration, while saving one certain amount of the energy.

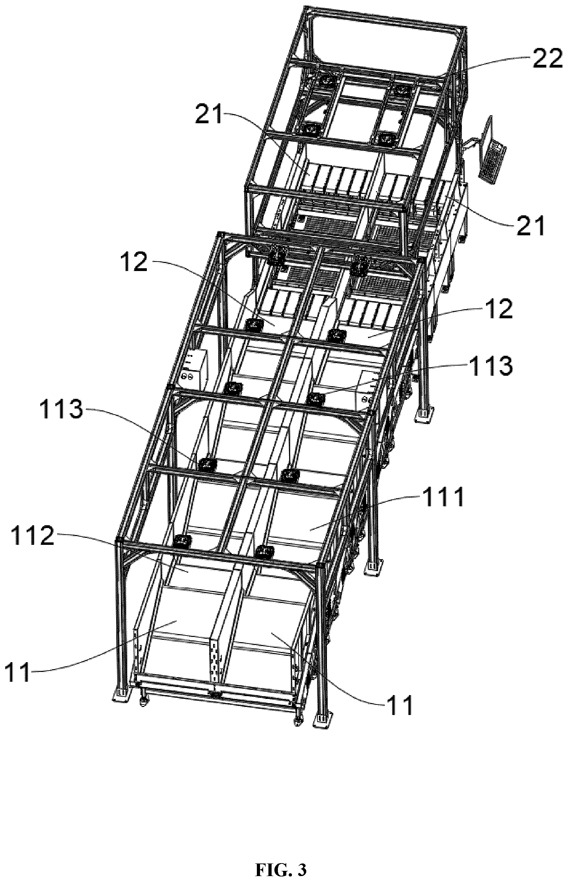

Further, with reference to FIGS. 3 to 7, in an i-th stacked-parcels separation unit 11, an initial velocity of each of the inclined conveyor belts 111 is V0, and a maximum velocity of the inclined conveyor belt 111 is Vi. The velocity of the inclined conveyor belt 111suddenly accelerates from V0 to Vi, and then suddenly decelerates from Vi to V0, so that the stacked parcels conveyed in the i-th stacked-parcels separation unit 11 is separated, so that an acceleration is provided by suddenly accelerating the velocity of the inclined conveyor belt 111 from V0 to Vi, and then suddenly decelerating from Vi to V0 in a short time period, and the stacked parcels are separated through an inertia between the parcels stacked up and down.

Further, with reference to FIGS. 3 to 7, in the i-th stacked-parcels separation unit 11, when the velocity of the inclined conveyor belt 111 is at V0, the visual identification system 113 is configured to identify parcel area data of a conveying surface of the current inclined conveyor belt 111 and calculate a percentage Wi% of a parcel area to a conveying surface area of the inclined conveyor belt 111. A stacking condition of the parcels conveyed by an (i+1)-th stacked-parcels separation unit 11 at this time instant is determined through comparing the Wi of the parcels conveyed by the i-th stacked-parcels separation unit 11 with a Wi+1 of the parcels conveyed by the (i+1)-th stacked-parcels separation unit 11.

When Wi+1=2Wi, it is determined that the parcels are stacked in the i-th stacked-parcels separation unit 11, whereas the stacked parcels are completely separated in the (i+1)-th stacked-parcels separation unit 11. When Wi+1=Wi, it is determined that the parcels are not stacked in the i-th stacked-parcels separation unit 11, and when Wi< Wi+1 <2Wi, it is determined that the parcels are stacked in the i-th stacked-parcels separation unit 11, and the parcels stacked in the (i+1)-th stacked-parcels separation unit 11 are still in a stacked state.

In a case of Wi+1=2Wi and Wi+1=Wi, when the parcels are not stacked in the (i+1)-th stacked-parcels separation unit 11, and the maximum velocity Vi+1 of the inclined conveyor belt 111 is equal to Vi in the (i+1)-th stacked-parcels separation unit 11.

In a case of Wi<Wi+1<2Wi, when the parcels are stacked in the i-th stacked-parcels separation unit 11 and the parcels stacked in the (i+1)-th stacked-parcels separation unit 11 are still in the stacked state, the maximum velocity Vi+1 of the inclined conveyor belt is greater than or equal to Vi in the (i+1)-th stacked-parcels separation unit 11.

Such that in the use, the percentage of the conveying surface area of the inclined conveyor belt 111 occupied by the parcels is identified by the visual identification system 113 in the previous (i-th) stacked-parcels separation unit 11 and the visual identification system 113 in the current ((i+1)-th) stacked-parcels separation unit 11, and the Wi of the parcels conveyed by the i-th stacked-parcels separation unit 11 is compared with the Wi+1 of the parcels conveyed by the (i+1)-th stacked-parcels separation unit 11. When Wi+1=2Wi, it is determined that the parcels are stacked in the i-th stacked-parcels separation unit 11, but the stacked parcels are completely separated in the (i+1)-th stacked-parcels separation unit 11. When Wi+1=Wi, it is determined that the parcels are not stacked in the i-th stacked-parcels separation unit 11. When Wi< Wi+1<2Wi, it is determined that the parcels are stacked in the i-th stacked-parcels separation unit 11, and the parcels stacked in the (i+1)-th stacked-parcels separation unit 11 are still in a stacked state, so that the maximum velocity Vi+1 of the parcels at the inclined conveyor belt 111 in the current ((i+1)-th) stacked-parcels separation unit 11 is adjusted according to the variation of the state of the parcels, and when the parcels are still in a stacked state, the maximum velocity Vi+1 of the inclined conveyor belt 111 is controlled to be varied, so that the stacked-parcels can be effectively and fully separated in the current stacked-parcels separation unit 11.

Further, when Wi<Wi+1<2Wi, the parcels are stacked in the i-th stacked-parcels separation unit 11, and the parcels stacked in the (i+1)-th stacked-parcels separation unit 11 are still in the stacked state, a ratio Xi+1 of a stacking difference between the parcels stacked in the (i+1)-th stacked-parcels separation unit (11) and the parcels stacked in the i-th stacked-parcels separation unit (11) is calculated as Xi+1= (Wi+1-Wi) /W1, when Xi+1≥0.5, the maximum velocity Vi+1 of the inclined conveyor belt 111 is equal to Vi in the (i+1)-th stacked-parcels separation unit 11, and when Xi+1 <0.5, the maximum velocity of the inclined conveyor belt 111 Vi+1 is equal to 1.2Vi in the (i+1)-th stacked-parcels separation unit 11.

Therefore, a misalignment degree between the two parcels stacked up and down in the previous (i-th) stacked-parcels separation unit 11 can be obtained through calculating the ratio Xi+1 of the stacking difference of the parcels in the current ((i+1)-th) stacked-parcels separation unit 11. When the misalignment degree of is greater than 0.5, the maximum velocity Vi+1 of the current inclined conveyor belt 111 is equal to Vi, and the maximum velocity is not varied. When the misalignment degree is consistent with the preset value in the previous stacked-parcels separation unit 11, the misalignment degree of the current stacked-parcels separation unit 11 is also greater than 0.5, so that the two parcels stacked up and down in the current stacked-parcels separation unit 11 can be completely separated. When the misalignment degree is less than 0.5, a force applied to the two parcels stacked up and down is relatively increased through letting the maximum velocity Vi+1 of the inclined conveyor belt be equal to 1.2Vi, that is, increasing the acceleration of the inclined conveyor belt in the (i+1)-th stacked-parcels separation unit, so that the two parcels stacked up and down can be separated more effectively, and the separation degree of the parcels stacked in the stacked-parcels separation unit is effectively ensured.

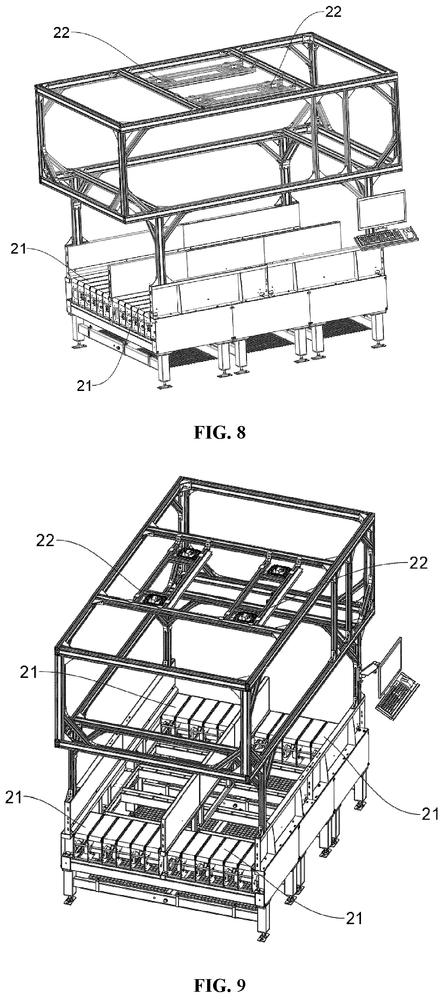

Further, with reference to FIGS. 8 to 10, each of the parcel singulation channels includes a plurality of parcel singulation units 21 and a single-parcel visual system 22, a conveying velocity of each of the parcel singulation unit 21 can be set individually, and the single-parcel visual system 22 is configured to identify parcel classification information, control the conveying velocity of each of the parcel singulation unit 21 individually, and arrange the parcels in order.

Each of the parcel singulation unit 21 includes a transmission belt 211, side guard plates 212, a driving roller 213, a synchronous pulley 214 and a synchronous belt 215. The side guard plates 212 are arranged on both sides of the transmission belt 211, and servo motors are arranged inside the two side guard plates 212, an output shaft of the servo motor is capable of outputting a power to the synchronous pulley 214 through the synchronous belt 215, and a rotation of the synchronous pulley 214 is capable of being transmitted to the driving roller 213 coaxial with the synchronous pulley 214, and the driving roller 213 is capable of driving the transmission belt 211 to rotate.

Therefore, in each of the parcel singulation channels, the parcel classification information is identified by the single-parcel visual system 22, and then the servo motor of the each of the parcel singulation units 21 is controlled by the background control terminal to output the rotary velocity, so that the output shaft of the servo motor is output the power to the synchronous pulley 214 through the synchronous belt 215, and the rotation of the synchronous pulley 214 is transmitted to the driving roller 213 coaxial with the synchronous pulley 214, and the transmission belt 211 is driven by the driving roller 213 to adjust the conveying velocity of the transmission belt 211 in each of the parcel singulation unit 21, thereby adjusting the conveying position of each of the parcels, arranging and conveying each of the parcels in order.

Working principle: the parcels are respectively conveyed into the two parcel separation channels which are arranged side by side and separated by a partition through the feeding mechanism according to the conveying positions of the parcels. In each of the parcel separation channels, the parcels are firstly passed through the multi-channel stacked-parcels separation mechanism 1, and since the multi-channel stacked-parcel separation mechanism includes a plurality of stacked-parcels separation channels, each of the parcels can be conveyed into a corresponding one of the stacked-parcel separation channels, respectively, according to the conveying directions of the conveyor belts, and in each of the stacked-parcels separation channels, the parcels are passed through a plurality of the stacked-parcels separation units 11 connected end to end in sequence.

In each of the stacked-parcels separation unit 11, the parcels are firstly entered the inclined conveyor belt 111. During the conveying process of the inclined conveyor belt 111, the visual identification system 113 can identify whether the parcels are overlapped, and the visual identification system 113 of the previous stacked-parcels separation unit 11 can control the maximum velocity of the inclined conveyor belt 111 of the subsequent stacked-parcels separation unit 11 according to the overlapping condition of the parcels conveyed by the current stacked-parcels separation unit 11. During the process of conveying the parcels by the inclined conveyor belt 111, the velocity of the inclined conveyor belt 111 suddenly accelerates and then suddenly decelerates, so that a misalignment is generated between the two parcels stacked up and down through an acceleration caused by sudden variation in velocity and on the basis of an inertia generated between the two parcels stacked up and down (parcels in stacked state), then the visual identification system 113 of the previous stacked-parcels separation unit 11 can control the maximum velocity of the inclined conveyor belt 111 of the subsequent stacked-parcels separation unit 11 to identify the misalignment condition of the parcels, according to the overlapping condition of the parcels conveyed by the current stacked-parcels separation unit 11, and control the maximum velocity of the inclined conveyor belt 111 of the subsequent stacked-parcels separation unit 11 to further separate the parcels stacked up and down when a greater acceleration is required, which ensures the effectiveness of the separation of the parcels stacked up and down, and stops the variation of the velocity of the inclined conveyor belt after the parcels stacked up and down are separated, thereby reducing the damage to the conveyor belt caused by the sudden acceleration and while saving a certain amount of the energy.

In each of the stacked-parcels separation channels, the percentage of the conveying surface area of the inclined conveyor belt 111 occupied by the parcels is identified by the visual identification system 113 in the previous (i-th) stacked-parcels separation unit 11 and the visual identification system 113 in the current ((i+1)-th) stacked-parcels separation unit 11, and the Wi of the parcels conveyed by the i-th stacked-parcels separation unit 11 is compared with the Wi+1 of the parcels conveyed by the (i+1)-th stacked-parcels separation unit 11. When Wi+1=2Wi, it is determined that the parcels are stacked in the i-th stacked-parcels separation unit 11, but the stacked parcels are completely separated in the (i+1)-th stacked-parcels separation unit 11. When Wi+1=Wi, it is determined that the parcels are not stacked in the i-th stacked-parcels separation unit 11, and the maximum velocity Vi+1 of the inclined conveyor belt 111 is equal to Vi in the (i+1)-th stacked-parcels separation unit 11. When Wi< Wi+1 <2Wi, it is determined that the parcels are stacked in the i-th stacked-parcels separation unit 11, and the parcels stacked in the (i+1)-th stacked-parcels separation unit 11 are still in a stacked state, so that the maximum velocity Vi+1 of the inclined conveyor belt 111 in the current ((i+1)-th) stacked-parcels separation unit 11 is adjusted according to the variation of the state of the parcels, and the maximum velocity Vi+1 of the inclined conveyor belt 111 is greater than or equal to Vi.

When the parcels are still in a stacked state, the maximum velocity Vi+1 of the inclined conveyor belt 111 is controlled to be varied. The misalignment degree between the two parcels stacked up and down in the previous (i-th) stacked-parcels separation unit 11 can be obtained through calculating the ratio Xi+1 of the stacking difference between the parcels in the current (i+1th) stacked-parcels separation unit 11. When the misalignment degree is greater than 0.5, the maximum velocity Vi+1 of the current inclined conveyor belt 111 is equal to Vi, and the maximum velocity is not varied. When the misalignment degree is consistent with the preset value inside the previous stacked-parcels separation unit 11, the misalignment degree of the current stacked-parcels separation unit 11 is also greater than 0.5, so that the two parcels stacked up and down in the current stacked-parcels separation unit 11 can be completely separated. When the misalignment degree is less than 0.5, a force applied to the two parcels stacked up and down is relatively increased through letting the maximum velocity Vi+1 of the inclined conveyor belt be equal to 1.2Vi, that is, increasing the acceleration of the inclined conveyor belt in the (i+1)-th stacked-parcels separation unit, so that the two parcels stacked up and down can be separated more effectively, and the separation degree of the parcels stacked in the stacked-parcels separation unit is effectively ensured.

After the overlapped parcels are separated, the parcels are fed into the transferring unit 12 for transferring and output to the corresponding parcel singulation channel in the multi-channel parcel singulation mechanism 2 corresponding to the stacked-parcels separation channel. In each of the parcel singulation channel, the parcel classification information is identified by the single-parcel visual system 22, and then the serve motor of the each of the parcel singulation units 21 is controlled by the background control terminal to output the rotary velocity, so that the output shaft of the servo motor is output the power to the synchronous pulley 214 through the synchronous belt 215, and the rotation of the synchronous pulley 214 is transmitted to the driving roller 213 coaxial with the synchronous pulley 214, and the conveyor belt 211 is driven by the driving roller 213 to rotate to adjust the conveying velocity of the conveyor belt 211 of each of the parcel singulation unit 21, and thereby adjusting the conveying direction of the each of the parcels, arranging and conveying each of the parcels in order.

After the parcels are screened and separated by the parcel singulation channel, then the parcels are centered, rectified the misalignment and aligned by the roller centering machine, finally conveyed into the dragsaw belt conveyor to pull each parcels apart by one certain distance, then output, so that the parcel sorting operation is completed. The multipurpose requirements can be satisfied through combining different numbers of the feeding mechanisms, the parcel separation channels, the roller centering machines and the dragsaw belt conveyors, and arranging a plurality of channels inside the parcel separation channel, and while the parcel processing efficiency of the entire multi-channel sorting machine for the parcel singulation can be effectively improved through arranging a plurality of channels, reducing the vacant regions on both sides of each of the channels, and increasing the utilization efficiency of the same areas.

Although the embodiments of the present invention are shown and described, it can be understood that, for those of ordinary skilled in the art, various variations, modifications, substitutions and variations can be made to the embodiments without departing from the principles and spirits of the present invention, and the scope of the present invention is defined by the appended claims and the equivalents.

## Claims

1. A multi-channel sorting machine for parcel singulation, **characterized in that**, the multi-channel sorting machine comprises a feeding mechanism, parcel separation channels, a roller centering machine and a dragsaw belt conveyor, the parcels are fed into the parcel separation channels by the feeding mechanism for separating, then the parcels are centered, rectified a misalignment, and aligned by the roller centering machine, and subsequently fed into the dragsaw belt conveyor to pull each parcel apart by one certain distance then output, wherein
at least two parcel separation channels are provided, each of the parcel separation channels is arranged side by side, and a partition is arranged between two adjacent parcel separation channels;
widths of the feeding mechanism, the roller centering machine and the dragsaw belt conveyor are all adapted to a total width of all of the parcel separation channels arranged side by side;
each of the parcel separation channels includes a multi-channel stacked-parcels separation mechanism (1) and a multi-channel parcel singulation mechanism (2), each of the multi-channel stacked-parcels separation mechanisms (1) includes a plurality of stacked-parcels separation channels, each of the multi-channel parcel singulation mechanism (2) includes a plurality of parcel singulation channels, and in each of the parcel separation channels, a number of the stacked-parcels separation channels is equal to a number of the parcel singulation channels;
each of the stacked-parcels separation channels includes a plurality of stacked-parcels separation units (11) and a transferring unit (12), the plurality of stacked-parcels separation units (11) are connected end to end in sequence, and the transferring unit (12) is configured to transfer the parcels conveyed by a last stacked-parcels separation unit (11) to the parcel singulation channel corresponding to the stacked-parcels separation channel;
each of the stacked-parcels separation units (11) includes an inclined conveyor belt (111), a horizontal conveyor belt (112) and a visual identification system (113);
the visual identification system (113) is capable of identifying whether the parcels are overlapped, and the visual identification system (113) of a previous stacked-parcels separation unit (11) is capable of controlling a maximum velocity of the inclined conveyor belt (111) of a subsequent stacked-parcels separation unit (11) according to an overlapping condition of the parcels conveyed by a current stacked-parcels separation unit (11);
in an i-th stacked-parcels separation unit (11), an initial velocity of each of the inclined conveyor belts (111) is V0, and a maximum velocity of the inclined conveyor belt (111) is Vi;
the velocity of the inclined conveyor belt (111) suddenly accelerates from V0 to Vi, and then suddenly decelerates from Vi to V0, to separate the stacked parcels conveyed in the i-th stacked-parcels separation unit (11);
in the i-th stacked-parcels separation unit (11), when the velocity of the inclined conveyor belt (111) is at V0, the visual identification system (113) is configured to identify parcel area data of a conveying surface of the current inclined conveyor belt (111) and calculate a percentage Wi% of a parcel area to a conveying surface area of the inclined conveyor belt (111);
a stacking condition of the parcels conveyed by an (i+1)-th stacked-parcels separation unit (11) at this time instant is determined through comparing the Wi of the parcels conveyed by the i-th stacked-parcels separation unit (11) with a Wi+1 of the parcels conveyed by the (i+1)-th stacked-parcels separation unit (11);
when Wi+1=2Wi, a circumstance that the parcels are stacked in the i-th stacked-parcels separation unit (11), whereas the stacked parcels are completely separated in the (i+1)-th stacked-parcels separation unit (11) is determined;
when Wi+1=Wi, a circumstance that the parcels are not stacked in the i-th stacked-parcels separation unit (11) is determined;
when Wi<Wi+1<2Wi, a circumstance that the parcels are stacked in the i-th stacked-parcels separation unit (11), and the parcels stacked in the (i+1)-th stacked-parcels separation unit (11) are still in a stacked state is determined;
in a case of Wi+1=2Wi and Wi+1=Wi, when the parcels are not stacked in the (i+1)-th stacked-parcels separation unit (11), the maximum velocity Vi+1 of the inclined conveyor belt (111) is equal to Vi in the (i+1)-th stacked-parcels separation unit (11); and
in a case of Wi<Wi+1<2Wi, and when the parcels are stacked in the i-th stacked-parcels separation unit (11), and the parcels stacked in the (i+1)-th stacked-parcels separation unit (11) are still in the stacked state,
the maximum velocity Vi+1 of the inclined conveyor belt is greater than or equal to Vi in the (i+1)-th stacked-parcels separation unit (11).

2. The multi-channel sorting machine for the parcel singulation according to claim 1, **characterized in that**, in the case of Wi<Wi+1<2Wi, when the parcels are stacked in the i-th stacked-parcels separation unit (11), and the parcels stacked in the (i+1)-th stacked-parcels separation unit (11) are still in the stacked state,
a ratio Xi+1 of a stacking difference between the parcels stacked in the (i+1)-th stacked-parcels separation unit (11) and the parcels stacked in the i-th stacked-parcels separation unit (11) is calculated, where Xi+1=(Wi+1-Wi)/W1;
when Xi+1≥0.5, the maximum velocity Vi+1 of the inclined conveyor belt (111) is equal to Vi in the (i+1)-th stacked-parcels separation unit (11); and
when Xi+1<0.5, the maximum velocity Vi+1 of the inclined conveyor belt (111) is equal to 1.2Vi in the (i+1)-th stacked-parcels separation unit (11).

3. The multi-channel sorting machine for the parcel singulation according to claim 1, **characterized in that**, each of the parcel singulation channels includes a plurality of parcel singulation units (21) and a single-parcel visual system (22), a conveying velocity of each of the parcel singulation units (21) is capable of being set individually, and the single-parcel visual system (22) is configured to identify parcel classification information, control the conveying velocity of each of the parcel singulation units (21) individually, and arrange the parcels in order.

4. The multi-channel sorting machine for the parcel singulation according to claim 1, **characterized in that**, each of the parcel singulation units (21) includes a transmission belt (211), side guard plates (212), a driving roller (213), a synchronous pulley (214) and a synchronous belt (215);
the side guard plates (212) are arranged on both sides of the transmission belt (211), and servo motors are arranged inside the two side guard plates (212), an output shaft of the servo motor is capable of outputting a power to the synchronous pulley (214) through the synchronous belt (215), and a rotation of the synchronous pulley (214) is capable of being transmitted to the driving roller (213) coaxial with the synchronous pulley (214), and the driving roller (213) is capable of driving the transmission belt (211) to rotate.
